# FASCICULE DE BREVET EUROPEEN

(11) **EP 2 203 862 B1**
(45) Date de publication et mention de la délivrance du brevet: **07.03.2012**
(21) Numéro de dépôt: 08842710.9
(22) Date de dépôt: 09.10.2008
(51) Int. Cl.: G06F 21/02, G06F 21/00, G07F 7/08

(54) **ECHANGE DE DONNEES ENTRE UN TERMINAL DE PAIEMENT ELECTRONIQUE ET UN OUTIL DE MAINTENANCE PAR UNE LIAISON USB**
DATENAUSTAUSCH ZWISCHEN EINEM ELEKTRONISCHEN BEZAHLUNGSENDGERÄT UND EINEM WARTUNGSWERKZEUG DURCH EINE USB-VERBINDUNG
DATA EXCHANGE BETWEEN AN ELECTRONIC PAYMENT TERMINAL AND A MAINTENANCE TOOL THROUGH A USB LINK

(30) Priorité: 12.10.2007 FR 0758250
(43) Date de publication de la demande: 07.07.2010
(73) Titulaire: Compagnie Industrielle et Financiere d'Ingenierie Ingenico, 92220 Neuilly sur Seine (FR)
(72) Inventeur: ROLIN, Christian, F-07500 Guilherand Granges (FR); TESTU, Dominique, F-07130 Saint Peray (FR)
(74) Mandataire: de Beaumont, Michel
(86) Numéro de dépôt international: PCT/FR2008/051836
(87) Numéro de publication internationale: WO 2009/053626

(56) Documents cités:
- US-A1- 2004 041 021
- ANONYMOUS: "Pull-up/Pull-down resistors - Universal Serial Bus Specification Revision 2.0" USB ENGINEERING CHANGE NOTICE, 23 mai 2003 (2003-05-23), XP002486920 Extrait de l'Internet: URL:http://web.archive.org/web/20030523151 133/http://www.usb.org/developers/docs/res istor_ecn.pdf> [extrait le 2008-07-02]
- JIM CHOATE: "USB 2.0 Electrical Overview passage" USB 2.0 ELECTRICAL OVERVIEW, XX, XX, 11 juin 2002 (2002-06-11), pages 1-25, XP002333869
- COMPAQ, HEWLETT-PACKARD, INTEL, LUCENT, MICROSOFT, NEC, PHILIPS: "Universal Serial Bus Specification Revision 2.0" UNIVERSAL SERIAL BUS (USB), 20 avril 2000 (2000-04-20), pages 119-193, XP002486921

## Description

### Domaine de l'invention

La présente invention concerne l'échange de données entre un terminal de paiement électronique et un outil de maintenance par l'intermédiaire d'une liaison USB (acronyme anglais pour Universal Serial Bus).

### Exposé de l'art antérieur

De plus en plus de terminaux de paiement électronique peuvent échanger des données avec un système externe, par exemple un ordinateur, par l'intermédiaire d'une liaison USB. A titre d'exemple, un terminal de paiement électronique peut être connecté à un ordinateur par l'intermédiaire d'une liaison USB afin que le terminal transmette à l'ordinateur des données, par exemple associées aux opérations de paiement réalisées par le terminal.

Il est souhaitable de pouvoir utiliser la liaison USB du terminal de paiement électronique pour réaliser des opérations de maintenance. Une opération de maintenance consiste, par exemple, à charger des logiciels dans une mémoire du terminal de paiement, à mettre à jour des logiciels déjà stockés dans le terminal de paiement, etc.

Le niveau de sécurité généralement exigé dans le domaine des opérations de paiement impose qu'une opération de maintenance ne doit pas pouvoir être réalisée lors du fonctionnement normal du terminal de paiement électronique. Pour ce faire, une solution classique consiste à prévoir, au niveau du terminal, un interrupteur de sélection permettant de passer d'un mode de fonctionnement normal dans lequel une opération de maintenance est interdite à un mode de maintenance dans lequel une opération de maintenance peut être réalisée. De ce fait, si un ordinateur connecté au terminal de paiement tente d'effectuer une opération de maintenance alors que le terminal se trouve dans le mode de fonctionnement normal, le terminal refusera d'échanger des données avec l'ordinateur.

Toutefois, le niveau de sécurité apporté par une telle solution peut s'avérer insuffisant. En effet, l'interrupteur de sélection peut être actionné de façon frauduleuse pour sélectionner le mode de maintenance. Le terminal de paiement électronique peut alors être relié à un ordinateur classique par la liaison USB afin de réaliser une opération frauduleuse dans le mode de maintenance. Le document US2004/0041021-A1 divulgue une unité de traitement communiquant avec un terminal de payement au moyen via un port USB. Le document XP-2486920 intitulé "USB ENGINEERING CHANGE NOTICE" applicable à la spécification USB Révision 2.0 divulgue de fonctionnement des résistances de tirage.

### Résumé de l'invention

Un aspect de la présente invention vise un terminal de paiement électronique adapté à empêcher un échange de données avec un ordinateur classique par une liaison USB dans un mode de maintenance.

Selon un autre objet, le terminal de paiement électronique est adapté à réaliser au moins en partie automatiquement le passage entre le mode de fonctionnement normal et le mode de maintenance.

Un autre aspect vise un système de maintenance qui, lorsque le terminal de paiement électronique est dans le mode de maintenance, est adapté à échanger des données avec le terminal par la liaison USB.

Un autre aspect vise un procédé d'échange de données entre le terminal de paiement électronique et le système de maintenance par la liaison USB.

Dans ce but, elle prévoit un terminal de paiement électronique comprenant une première borne de connexion USB comportant au moins un premier fil de transfert de données. Le terminal de paiement comprend, en outre, une première résistance reliant le premier fil à une première source d'un premier potentiel et un interrupteur entre le premier fil et la première résistance ou entre la première résistance et la première source.

Selon un exemple de réalisation, le terminal comprend un circuit de commande adapté à fermer l'interrupteur dans un premier mode de fonctionnement et à ouvrir l'interrupteur dans un second mode de fonctionnement. Le terminal est destiné à être relié, par la première borne de connexion USB, à un premier système dans le premier mode de fonctionnement et à un second système dans le second mode de fonctionnement. Les premier et second systèmes sont adaptés à initier un échange de données avec le terminal. Le premier système comprend un deuxième fil destiné à être relié au premier fil et une deuxième résistance reliant le deuxième fil à une deuxième source d'un deuxième potentiel strictement inférieur au premier potentiel. Le second système comprend un troisième fil destiné à être relié au premier fil et une troisième résistance reliant le troisième fil à une troisième source d'un troisième potentiel strictement supérieur au deuxième potentiel.

Il est également prévu un système comprenant au moins une seconde borne de connexion USB comportant au moins un quatrième fil de transfert de données. Le système comprend un circuit adapté à transmettre, par la seconde borne de connexion USB, de façon répétée une requête d'identification pour débuter un échange de données par la seconde borne de connexion tant qu'un signal de réponse n'est pas reçu depuis la seconde borne de connexion.

Selon un exemple de réalisation, le système est destiné à être relié à un terminal tel que défini précédemment.

Selon un exemple de réalisation, le système comprend une quatrième source d'un quatrième potentiel, une cinquième source d'un cinquième potentiel strictement supérieur au quatrième potentiel et une quatrième résistance reliant le quatrième fil à la cinquième source.

Il est également prévu un procédé d'échange de données entre un terminal de paiement électronique et un premier système ou un second système. Le terminal comprend une borne de connexion USB comprenant au moins un premier fil de transfert de données. Le terminal comprend, en outre, une première résistance reliant le premier fil à une première source d'un premier potentiel, et un interrupteur entre le premier fil et la première résistance ou entre la première résistance et la première source. Les premier et second systèmes sont adaptés à initier un échange de données avec le terminal. Le premier système comprend un deuxième fil destiné à être relié au premier fil et une deuxième résistance reliant le deuxième fil à une deuxième source d'un deuxième potentiel strictement inférieur au premier potentiel. Le second système comprend un troisième fil destiné à être relié au premier fil et une troisième résistance reliant le troisième fil à une troisième source d'un troisième potentiel strictement supérieur au deuxième potentiel. Le procédé comprend les étapes consistant à amener le terminal à ouvrir l'interrupteur pour permettre l'échange de données entre le terminal et le second système ; et à amener le terminal à fermer l'interrupteur pour permettre l'échange de données entre le terminal et le premier système.

Selon un exemple de réalisation, le procédé consiste à amener le terminal, à la mise sous tension du terminal, à ouvrir l'interrupteur pendant une durée donnée, et, à fermer ensuite l'interrupteur si, pendant ladite durée, un échange de données n'a pas eu lieu entre le terminal et le second système.

Selon un exemple de réalisation, le procédé consiste à amener le terminal à ne pas répondre à des requêtes fournies par le second système lorsque l'interrupteur est fermé.

Selon un exemple de réalisation, le procédé consiste à amener le second système à transmettre, au moins en partie par le troisième fil, de façon répétée une requête d'identification pour débuter un échange de données avec le terminal tant que le second système ne reçoit pas de réponse du terminal.

### Brève description des dessins

Ces objets, caractéristiques et avantages, ainsi que d'autres seront exposés en détail dans la description suivante d'un exemple de réalisation particulier faite à titre non-limitatif en relation avec les figures jointes parmi lesquelles :
la figure 1 représente, de façon schématique, un exemple classique de liaison entre un terminal de paiement électronique et un ordinateur par un câble USB ;
la figure 2 représente, de façon schématique, un exemple de liaison selon l'invention entre un terminal de paiement électronique et un outil de maintenance par un câble USB ; et
la figure 3 représente, sous la forme d'un schéma par blocs, un exemple de procédé de fonctionnement du terminal.

### Description détaillée

Par souci de clarté, de mêmes éléments ont été désignés par de mêmes références aux différentes figures. Seuls les éléments nécessaires à la compréhension de la présente invention sont représentés sur les figures et seront décrits par la suite.

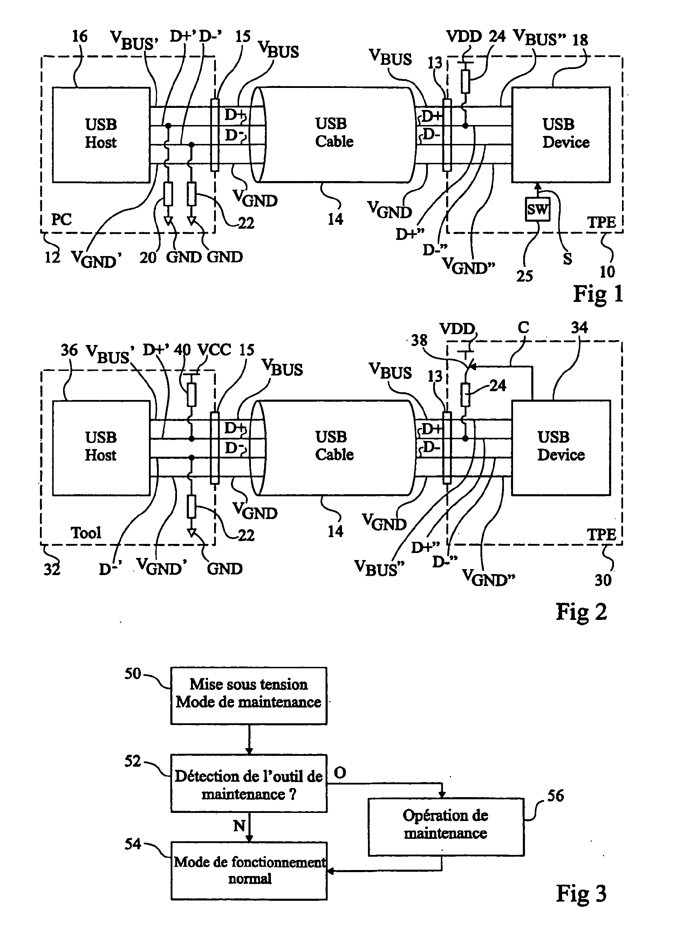

La figure 1 représente, de façon classique, un terminal de paiement électronique 10 (TPE) relié à un ordinateur 12 (PC). Le terminal 10 comprend une borne de connexion USB 13 dans laquelle est connectée une extrémité d'un câble USB 14 (USB Cable). L'ordinateur 12 comprend une borne de connexion USB 15 recevant l'extrémité opposée du câble USB 14. De façon classique, le terminal de paiement électronique 10 permet de réaliser des opérations de paiement, par exemple par l'intermédiaire d'une carte à puce, d'une carte magnétique, d'un chèque, etc...

Comme cela est décrit dans la norme USB 2.0, le câble USB 14 comprend quatre fils conducteurs ou lignes conductrices. Le fil conducteur V_{BUS} sert à la transmission d'un potentiel de référence haut, généralement de quelques volts. Le fil conducteur V_{GND} sert à la transmission d'un potentiel de référence bas, généralement la masse de l'ordinateur 12. Les fils conducteurs D+ et D- servent à la transmission du signal utile. L'ordinateur 12 comprend un module de communication 16 (USB Host), appelé module hôte 16 dans la suite de la description. La borne de connexion 15 comprend quatre fils V_{BUS}', D+', D-' et V_{GND}' qui prolongent respectivement les fils V_{BUS}, D+, D- et V_{GND} jusqu'au module hôte 16. Le terminal 10 comprend un module de communication 18 (USB Device), appelé module périphérique dans la suite de la description. La borne de connexion 13 comprend quatre fils V_{BUS}", D+", D-" et V_{GND}" qui prolongent respectivement les fils V_{BUS}, D+, D- et V_{GND} jusqu'au module périphérique 18. Les modules 16 et 18 sont adaptés à échanger des données par l'intermédiaire du câble USB 14, par exemple selon le protocole d'échange de données décrit dans la norme USB 2.0. En particulier, l'échange de données est initié par le module hôte 16.

De façon classique, on prévoit au niveau de l'ordinateur 12 des résistances 20, 22 (généralement appelées résistances Pull Down) reliant les fils D+' et D-' à la masse GND. Du côté du terminal 10, et, de façon générale, du côté de n'importe quel appareil périphérique adapté à être connecté à un ordinateur par une liaison USB, il est prévu une résistance 24 (généralement appelée résistance Pull Up) qui relie le fil D+" (ou, à titre de variante, le fil D-") à une source VDD d'un potentiel haut généralement de quelques volts. La résistance Pull Up 24 est plus faible, généralement d'un ordre de grandeur, que les résistances Pull Down 20, 22. La source VDD peut correspondre au fil V_{BUS}".

Lorsque le terminal 10 n'est pas connecté à l'ordinateur 12, les fils D+, D+', D- et D-' sont sensiblement maintenus au potentiel de la masse GND par l'intermédiaire des résistances 20, 22 côté ordinateur 12. Lorsque le terminal 10 est connecté à l'ordinateur 12 par le câble USB 14, le module hôte 16 détecte la présence du terminal 10 par l'élévation du potentiel des fils D+', D+, D+" due à la résistance 24 côté terminal 10 qui relie le fil D+" à la source VDD. Le module hôte 16 initie alors un échange de données avec le terminal 10, généralement par l'envoi d'une requête d'identification au terminal 10 pour obtenir les paramètres de fonctionnement du terminal (par exemple la requête Getdescriptor définie par la norme USB 2.0). En l'absence de réponse du terminal 10, le module hôte 16 transmet à nouveau la requête d'identification à deux reprises. Si le terminal 10 ne répond toujours pas, le module hôte 16 considère que le module périphérique 18 est hors service et la communication est interrompue.

Le terminal 10 comprend un module de sélection 25 (SW) adapté à fournir un signal S de sélection de modes de fonctionnement au module périphérique 18. Le module de sélection 25 peut être un interrupteur mécanique. Selon la valeur du signal S transmis par le module de sélection 25, le module périphérique 18 fonctionne dans un mode de fonctionnement normal ou dans un mode de maintenance. Dans chacun de ces modes, le module périphérique 18 est adapté à échanger des données sur la liaison USB 14 selon un protocole particulier et s'attend notamment à recevoir des requêtes d'un type particulier.

Pour éviter qu'une opération de maintenance puisse être réalisée par un ordinateur classique pour permettre que le passage entre le mode de fonctionnement normal et le mode de maintenance soit effectué, au moins en partie, de façon automatique par le terminal, il est prévu de modifier la structure du terminal de sorte qu'une opération de maintenance ne puisse être réalisée que par un outil de maintenance spécifique ayant une structure différente de celle d'un ordinateur classique. En outre, le protocole d'échange entre l'outil de maintenance et le terminal est modifié par rapport au protocole d'échange classique décrit dans la norme USB 2.0.

Plus précisément, on prévoit que, dans le mode de maintenance, le terminal est adapté à temporairement "retirer" la résistance Pull Up de façon à ne pas élever le potentiel des fils D+', D+, D+" lorsque le terminal est relié à l'outil de maintenance (ou à un ordinateur) par une liaison USB. En outre, il est prévu que l'outil de maintenance envoie en permanence une requête d'identification jusqu'à ce qu'il reçoive une réponse de la part du terminal. De ce fait, c'est le terminal qui détecte la présence de l'outil de maintenance par la réception d'une requête d'identification et non l'outil de maintenance qui détecte la présence du terminal par une élévation du potentiel des fils D+', D+, D+". En mode de fonctionnement normal, le terminal est adapté à "remettre en place" la résistance Pull Up pour permettre un échange de données classique selon la norme USB classique.

La figure 2 représente un exemple de réalisation du terminal de paiement électronique 30 (TPE) et de l'outil de maintenance 32 (Tool). Les éléments communs avec le terminal 10 et l'ordinateur 12 représentés en figure 1 sont désignés par les mêmes références. Le terminal 30 comprend un module de communication 34 (USB Device), appelé module périphérique, fonctionnant de façon analogue au module 18 sauf sur certains points qui vont être décrits par la suite. De même, l'outil de maintenance 32 (Tool) comprend un module de communication 36 (USB Host), appelé module hôte, fonctionnant de façon analogue au module 16 à la différence que le protocole de communication mis en oeuvre par le module 36 diffère en certains points du protocole de communication classique mis en oeuvre par le module 16.

Le terminal 30 comprend un interrupteur 38 disposé, par exemple, entre la résistance 24 et la source de potentiel de référence VDD. L'interrupteur 38 est commandé par un signal C, fourni par le module périphérique 34. L'outil de maintenance 32 comprend une résistance 40 du type Pull Up reliant le fil D+' à une source d'un potentiel de référence haut VCC. La source VCC peut correspondre au fil V_{BUS}'. L'outil 32 comprend, en outre, la résistance Pull Down 22 reliant le fil D-' à la masse GND, la résistance 20 reliant le fil D+' à la masse n'étant pas présente. Les résistances 40, 22 assurent une polarisation convenable des fils D+' et D-' pour permettre la transmission de données sur la liaison USB 14.

Dans le mode de fonctionnement normal, le module périphérique 34 commande la fermeture de l'interrupteur 38 de sorte que le terminal 30 puisse fonctionner de façon analogue au terminal 10 représenté en figure 1. En particulier, le terminal 30 peut alors être relié de façon classique à un ordinateur par la liaison USB 14.

Dans le mode de maintenance, le module périphérique 34 commande l'ouverture de l'interrupteur 38. Dans ce cas, si le terminal 30 est connecté à un ordinateur classique, tel que l'ordinateur 12 de la figure 1, l'ordinateur 12 ne peut pas détecter la présence du terminal 30 puisque les fils D+' et D-' restent à la masse. Aucun échange de données ne peut alors se produire.

La figure 3 illustre les étapes d'un exemple de procédé de fonctionnement du terminal 30.

A l'étape 50, le terminal 30 est mis sous tension. Le module périphérique 34 commande l'ouverture de l'interrupteur 38. Le terminal 30 est alors dans le mode de maintenance. Le procédé se poursuit à l'étape 52.

A l'étape 52, le terminal 30 attend la réception d'une requête de l'outil de maintenance 32. Si, au bout d'une durée déterminée, aucun échange de données n'a eu lieu entre le terminal 30 et l'outil de maintenance 32, le procédé se poursuit à l'étape 54.

A l'étape 54, le module périphérique 34 commande la fermeture de l'interrupteur 38. Le terminal 30 est alors dans le mode de fonctionnement normal. Une fois que le terminal 30 est dans le mode de fonctionnement normal, il est nécessaire, pour réaliser une opération de maintenance, d'éteindre puis de remettre sous tension le terminal 30.

A l'étape 52, si le terminal 30 reçoit une requête de l'outil de maintenance 32, le procédé se poursuit à l'étape 56.

A l'étape 56, une opération de maintenance a lieu. Lorsqu'elle est achevée, le procédé se poursuit à l'étape 54 dans laquelle le terminal 30 passe en mode de fonctionnement normal.

A l'étape 52, lorsque le terminal 30 est relié à l'outil de maintenance 32 par la liaison USB 14, l'outil de maintenance 32 n'est pas en mesure de détecter la présence du terminal 30 puisque le fil D+' est à un potentiel haut par l'intermédiaire de la résistance pull up 40 indépendamment de la présence ou de l'absence du terminal 30. De ce fait, si on utilisait le protocole USB d'échanges de données classique, le module hôte 36 croirait détecter la présence du terminal 30 dès sa mise en marche et transmettrait immédiatement trois fois la requête d'identification et, du fait qu'il serait fort peu probable que le terminal 30 soit présent à cet instant, le module hôte 36 empêcherait tout échange de données ultérieur. Pour qu'un échange de données puisse être effectué, il est nécessaire de modifier les étapes initiales du protocole USB mis en oeuvre par le module hôte 36. Pour ce faire, on prévoit que le module hôte 36 transmette sans arrêt une requête d'identification jusqu'à ce qu'il reçoive une réponse de la part du terminal 30. De ce fait, lorsque le terminal 30 est dans le mode de maintenance, le module périphérique 34 détecte la présence de l'outil de maintenance 30 par la réception d'une requête d'identification transmise par les fils D+ et D-. Le module périphérique 34 peut alors répondre au module hôte 36 et l'échange de données peut se poursuivre de façon classique à l'étape 56. Si le terminal 30 est dans le mode de fonctionnement normal, il suffit qu'il ne réponde pas à la requête d'identification du module hôte 36 pour empêcher qu'une opération de maintenance ait lieu.

Selon une variante, l'outil de maintenance 32 peut être autonome ou connecté lui-même à un ordinateur.

Des modes de réalisation particuliers de la présente invention ont été décrits. Diverses variantes et modifications apparaîtront à l'homme de l'art. En particulier, bien que la présente invention ait été décrite pour la maintenance d'un terminal de paiement électronique, il est clair que la présente invention peut s'appliquer à tout type d'opérations réalisées auprès d'un terminal de paiement électronique pour lesquelles on souhaite imposer l'utilisation d'un outil spécifique et non d'un ordinateur classique. Il s'agit, par exemple, d'une opération de diagnostic.

## Revendications

1. Procédé d'échange de données entre un terminal de paiement électronique (30) et un premier système (12) ou un second système (32), le terminal comprenant une borne de connexion USB (13) comprenant au moins un premier fil (D+) de transfert de données, une première résistance (24) reliant le premier fil à une première source (VDD) d'un premier potentiel, et un interrupteur (38) entre le premier fil et la première résistance ou entre la première résistance et la première source, les premier et second systèmes étant adaptés à initier un échange de données avec le terminal, **caractérisé en ce que** le premier système comprenant un deuxième fil (D+') destiné à être relié au premier fil et une deuxième résistance (20) reliant le deuxième fil à une deuxième source (GND) d'un deuxième potentiel strictement inférieur au premier potentiel et le second système comprenant un troisième fil (D+') destiné à être relié au premier fil et une troisième résistance (40) reliant le troisième fil à une troisième source (VCC) d'un troisième potentiel strictement supérieur au deuxième potentiel, le procédé comprenant les étapes suivantes :
amener le terminal à ouvrir l'interrupteur pour permettre un échange de données entre le terminal et le second système ; et
amener le terminal à fermer l'interrupteur pour permettre un échange de données entre le terminal et le premier système.

2. Procédé selon la revendication 1, consistant à amener le terminal (30), à la mise sous tension du terminal, à ouvrir l'interrupteur (38) pendant une durée donnée, et, à fermer ensuite l'interrupteur si, pendant ladite durée, un échange de données n'a pas eu lieu entre le terminal et le second système (32).

3. Procédé selon la revendication 1 ou 2, consistant à amener le terminal (30) à ne pas répondre à des requêtes fournies par le second système (32) lorsque l'interrupteur (38) est fermé.

4. Procédé selon l'une quelconque des revendications 1 à 3, consistant à amener le second système (32) à transmettre, au moins en partie par le troisième fil (D+'), de façon répétée, une requête d'identification pour débuter un échange de données avec le terminal (30) tant que le second système ne reçoit pas de réponse du terminal.

5. Terminal de paiement électronique (30) comprenant :
une première borne de connexion USB (13) comportant au moins un premier fil (D+") de transfert de données ;
une première résistance (24) reliant le premier fil à une première source (VDD) d'un premier potentiel ;
un interrupteur (38) entre le premier fil et la première résistance ou entre la première résistance et la première source,
**caractérisé en ce qu'**il comprend un circuit (34) de commande adapté à fermer l'interrupteur (38) dans un premier mode de fonctionnement et à ouvrir l'interrupteur dans un second mode de fonctionnement, le terminal étant adapté à être relié, par la première borne de connexion USB (13), à un premier système (12) dans le premier mode de fonctionnement et à un second système (32) dans le second mode de fonctionnement, les premier et second systèmes étant adaptés à initier un échange de données avec le terminal, le premier système comprenant un deuxième fil (D+') adapté à être relié au premier fil (D+") et une deuxième résistance (20) reliant le deuxième fil à une deuxième source (GND) d'un deuxième potentiel strictement inférieur au premier potentiel et le second système comprenant un troisième fil (D+') adapté à être relié au premier fil et une troisième résistance (40) reliant le troisième fil à une troisième source (VCC) d'un troisième potentiel strictement supérieur au deuxième potentiel.

6. Système (32) adapté à être relié à un terminal selon la revendication 5, comprenant au moins une seconde borne de connexion USB (15) comportant au moins un quatrième fil (D+") de transfert de données, **caractérisé en ce qu'**il comprend un circuit (36) adapté à transmettre, par la seconde borne de connexion USB, de façon répétée une requête d'identification pour débuter un échange de données par la seconde borne de connexion tant qu'un signal de réponse n'est pas reçu depuis la seconde borne de connexion.

7. Système selon la revendication 6, comprenant une quatrième source (GND) d'un quatrième potentiel, une cinquième source (VCC) d'un cinquième potentiel strictement supérieur au quatrième potentiel et une quatrième résistance (40) reliant le quatrième fil (D+') à la cinquième source.

## Claims

1. A method for exchanging data between an electronic payment terminal (30) and a first system (12) or a second system (32), the terminal comprising a USB connection terminal (13) comprising at least one first data transfer wire (D+), a first resistor (24) connecting the first wire to a first source (VDD) of a first voltage, and a switch (38) between the first wire and the first resistor or between the first resistor and the first source, the first and second systems being adapted to initiate a data exchange with the terminal,
**characterized in that** the first system comprises a second wire (D+') intended to be connected to the first wire and a second resistor (20) connecting the second wire to a second source (GND) of a second voltage strictly smaller than the first voltage and the second system comprises a third wire (D+') intended to be connected to the first wire and a third resistor (40) connecting the third wire to a third source (VCC) of a third voltage strictly greater than the second voltage, the method comprising the steps of:
having the terminal turn off the switch to allow for a data exchange between the terminal and the second system; and
having the terminal turn on the switch to allow for a data exchange between the terminal and the first system.

2. The method of claim 1, comprising having the terminal (30), when the terminal is powdered on, turn off the switch (38) for a given time period and then turn on the switch if, during said time period, a data exchange has not occurred between the terminal and the second system (32).

3. The method of claim 1 or 2, comprising having the terminal (30) not respond to requests issued by the second system (32) when the switch (38) is on.

4. The method of any of claims 1 to 3, comprising having the second system (32) repeatedly transmit, at least partly over the third wire (D+'), an identification request to start a data exchange with the terminal (30) as long as the second system receives no response from the terminal.

5. An electronic payment terminal (30) comprising:
a first USB connection terminal (13) comprising at least one first data transfer wire (D+");
a first resistor (24) connecting the first wire to a first source (VDD) of a first voltage;
a switch (38) between the first wire and the first resistor or between the first resistor and the first source,
**characterized in that** it comprises a control circuit (34) capable of turning on the switch (38) in a first operating mode and of turning off the switch in a second operating mode, the terminal being adapted to be connected, by the first USB connection terminal (13), to a first system (12) in the first operating mode and to a second system (32) in the second operating mode, the first and second systems being capable of initiating a data exchange with the terminal, the first system comprising a second wire (D+') adapted to be connected to the first wire (D+") and a second resistor (20) connecting the second wire to a second source (GND) of a second voltage strictly smaller than the first voltage and the second system comprising a third wire (D+') adapted to be connected to the first wire and a third resistor (40) connecting the third wire to a third source (VCC) of a third voltage strictly greater than the second voltage.

6. A system (32) adapted to be connected to the terminal of claim 5, comprising at least one fourth USB connection terminal (15) comprising at least one fourth data transfer wire (D+"), comprising a circuit (36) capable of repeatedly transmitting, over the second USB connection terminal, an identification request to start a data exchange by the second connection terminal as long as a response signal has not been received from the second connection terminal.

7. The system of claim 6, comprising a fourth source (GND) of a fourth voltage, a fifth source (VCC) of a fifth voltage strictly greater than the fourth voltage and a fourth resistor (40) connecting the fourth wire (D+') to the fifth source.

## Patentansprüche

1. Ein Verfahren zum Austausch von Daten zwischen einem elektronischen Bezahlungsendgerät (30) und einem ersten System (12) oder einem zweiten System (32), wobei das Endgerät einen USB Verbindungsanschluss (13) aufweist, der wenigstens einen ersten Datenübertragungsdraht (D+), einen ersten Widerstand (24), der den ersten Draht mit einer ersten Quelle (VDD) einer ersten Spannung verbindet und einen Schalter (38) zwischen dem ersten Draht und dem ersten Widerstand oder zwischen dem ersten Widerstand und der ersten Quelle aufweist, wobei das erste und das zweite System angepasst sind um einen Datenaustausch mit dem Endgerät zu initiieren,
**dadurch gekennzeichnet, dass** das erste System einen zweiten Draht (D+') aufweist, der vorgesehen ist mit dem ersten Draht und einem zweiten Widerstand (20), der den zweiten Draht mit einer zweiten Quelle (GND) einer zweiten Spannung, die unbedingt kleiner als die erste Spannung ist, verbunden zu werden und wobei das zweite System einen dritten Draht (D+') aufweist, der vorgesehen ist mit dem ersten Draht und einem dritten Widerstand (40), der den dritten Draht mit einer dritten Quelle (VCC) einer dritten Spannung, die unbedingt größer als die zweite Spannung ist, verbunden zu werden, wobei das Verfahren die folgenden Schritte aufweist:
Ausschalten des Schalters durch das Endgerät, um einen Datenaustausch zwischen dem Endgerät und dem zweiten System zu erlauben; und
Einschalten des Schalters durch das Endgerät, um einen Datenaustausch zwischen dem Endgerät und dem ersten System zu erlauben.

2. Das Verfahren nach Anspruch 1, wobei das Verfahren ferner das Ausschalten des Schalters (38) für eine bestimmte Zeitdauer durch das Endgerät (30) aufweist, wenn das Endgerät eingeschaltet ist, und dann das Einschalten des Schalters, wenn während der Zeitdauer ein Datenaustausch zwischen dem Endgerät und dem zweiten System (32) nicht aufgetreten ist.

3. Das Verfahren nach Anspruch 1 oder 2, wobei das Verfahren ferner das nicht Antworten des Endgeräts (30) auf Anfragen des zweiten Systems (32) aufweist, wenn der Schalter (38) an ist.

4. Das Verfahren nach Anspruch 1 bis 3, wobei das Verfahren ferner das mehrfache Übertragen einer Identifikationsanfrage durch das zweite System (32), wenigstens zum Teil über den dritten Draht (D+') aufweist, um einen Datenaustausch mit dem Endgerät (30) zu starten, so lange wie das zweite System keine Antwort von dem Endgerät empfängt.

5. Ein elektronisches Bezahlungsendgerät (30), das Folgendes aufweist:
einen USB Verbindungsanschluss (13), der wenigstens einen ersten Datenübertragungsdraht (D+") aufweist;
einen ersten Widerstand (24), der den ersten Draht mit einer ersten Quelle (VDD) einer ersten Spannung verbindet;
einen Schalter (38) zwischen dem ersten Draht und dem ersten Widerstand oder zwischen dem ersten Widerstand und der ersten Quelle,
**dadurch gekennzeichnet, dass** das Endgerät einen Steuerschaltkreis (34) aufweist, der geeignet ist den Schalter (38) in einem ersten Betriebsmodus einzuschalten und den Schalter in einem zweiten Betriebsmodus auszuschalten, wobei das Endgerät angepasst ist über den ersten USB Verbindungsanschluss (13) in dem ersten Betriebsmodus mit einem ersten System (12) verbunden zu sein und mit einem zweiten System (32) in dem zweiten Betriebsmodus, wobei das erste und das zweite System geeignet sind einen Datenaustausch mit dem Endgerät zu initiieren, wobei das erste System einen zweiten Draht (D+') aufweist, der angepasst ist um mit dem ersten Draht (D+") verbunden zu werden und einen zweiten Widerstand (20), der den zweiten Draht mit einer zweiten Quelle (GND) einer zweiten Spannung verbindet, die unbedingt kleiner ist als die erste Spannung und wobei das zweite System einen dritten Draht (D+') aufweist, der angepasst ist um mit dem ersten Draht verbunden zu werden und einen dritten Widerstand (40), der den dritten Draht mit einer dritten Quelle (VCC) einer dritten Spannung verbindet, die unbedingt größer ist als die zweite Spannung.

6. Ein System (32), das angepasst ist um mit dem Endgerät nach Anspruch 5 verbunden zu werden, wobei das System wenigstens einen vierten USB Verbindungsanschluss (15) aufweist, der wenigstens einen vierten Datenübertragungsdraht (D+") aufweist, und wobei das System ferner einen Schaltkreis (36) aufweist, der geeignet ist mehrfach Identifikationsanfragen über den zweiten USB Verbindungsanschluss zu übertragen, um einen Datenaustausch durch den zweiten Verbindungsanschluss zu starten, so lange wie kein Antwortsignal von dem zweiten Verbindungsanschluss empfangen wurde.

7. Das System nach Anspruch 6, wobei das System eine vierte Quelle (GND) einer vierten Spannung, eine fünfte Quelle (VCC) einer fünften Spannung, die unbedingt größer ist als die vierte Spannung, und einen vierten Widerstand (40) aufweist, der den vierten Draht (D+') mit der fünften Quelle verbindet.
